**Europäisches Patentamt**

**European Patent Office**

**Office européen des brevets**

(19)

(11) Veröffentlichungsnummer: **0 380 954**
**A2**

## (12) EUROPÄISCHE PATENTANMELDUNG

(21) Anmeldenummer: **90100798.9**

(22) Anmeldetag: **16.01.90**

(51) Int. Cl.⁵: **B23Q 11/00, B27G 3/00**

(30) Priorität: **01.02.89 DE 8901092 U**

(43) Veröffentlichungstag der Anmeldung:
**08.08.90 Patentblatt 90/32**

(84) Benannte Vertragsstaaten:
**AT BE CH DE FR LI LU NL**

(71) Anmelder: **Hundegger, Hans**
**Kemptener Strasse 1**
**D-8941 Hawangen(DE)**

(72) Erfinder: **Hundegger, Hans**
**Kemptener Strasse 1**
**D-8941 Hawangen(DE)**

(74) Vertreter: **Pfister, Helmut, Dipl.-Ing.**
**Buxacher Strasse 9**
**D-8940 Memmingen/Bayern(DE)**

(54) **Vorrichtung zur Späneableitung an Hobelmaschinen.**

(57) Die Späneableitung an Hobelmaschinen ist insbesondere bei nassem Holz unbefriedigend. Die Späne kleben im Kanal und führen zu Verstopfungen. Die Späneableitung wird wesentlich verbessert, wenn impulsartig Druckluft in den Spanableitungskanal eingeleitet wird. Die stoßweise Einleitung reduziert den Druckluftverbrauch wesentlich.

EP 0 380 954 A2

## Vorrichtung zur Späneableitung an Hobelmaschinen

Die Erfindung betrifft eine Vorrichtung zur Späneableitung an Hobelmaschinen oder ähnlichen spanerzeugenden Holzbearbeitungsmaschinen, mit einem Spanableitungskanal, der in der Nähe des Werkzeuges, insbesondere der Hobelmesser beginnt und mit einer Druckluftzuleitung zum Kanal.

Bei Hobelmaschinen oder ähnlichen spanerzeugenden Holzbearbeitungsmaschinen werden durch eine rotierende Messerwelle oder durch andere Werkzeuge Späne erzeugt, die durch einen Spänekanal weitergeleitet werden sollen. Der Spänetransport erfolgt im allgemeinen durch den Druckluftstrom, den das rotierende Werkzeug erzeugt.

Es ist ferner bekannt, Absaugeinrichtungen vorzusehen, die die Späne weiterfördern, beispielsweise zu einer Abscheideeinrichtung oder dergleichen.

Wird nasses Holz verarbeitet, ergibt sich das Problem, daß die Späne an den Wandungen des Spanableitungskanals kleben bleiben. Dies gilt insbesondere in unmittelbarer Nähe des rotierenden Messers bzw. an den Anfängen des Kanals zur Späneabförderung. Bleibt ein Span oder bleiben einige Späne im Spänekanal kleben, bauen sich die weiteren Späne rasch aufeinander auf und verstopfen den Ableitungskanal ganz. Die Späne reichen dann bis zum rotierenden Messer und bremsen dieses ab. Es ist dann notwendig, die Maschine abzustellen und den Spänekanal von Hand zu säubern, beispielsweise unter Verwendung einer Druckluftpistole.

Es ist bekannt, den Abtransport der Späne zu verbessern, indem mittels eines Gebläses ein zusätzlicher Luftstrom erzeugt wird, der den Luftstrom, den das Werkzeug selbst erzeugt, verstärkt. Die Wirkung solcher Maßnahmen ist jedoch verhältnismäßig gering. Feuchte, klebrige Späne können auf diese Weise nicht an der Ablagerung im Spänekanal gehindert werden.

Es erscheint zwar möglich, eine Druckluftleitung an den Spänekanal anzuschließen, um mit einem starken Druckluftstrom die Späne weiterzufördern. Der Druckluftverbrauch einer solchen Maßnahme ist jedoch beträchtlich, so daß diese Lösung praktisch nicht realisierbar ist.

Ähnliches gilt auch für die Erzeugung eines extremen Unterdrucks im Absaugkanal. Der Energieaufwand zur Erreichung eines starken Unterdrucks ist erheblich. Andererseits ist die Druckdifferenz, die auf diese Weise erreichbar ist, nur gering.

Es ist Aufgabe der Erfindung, bei der Vorrichtung der eingangs angegebenen Gattung eine Anordnung zu treffen, die in einfacher Weise und mit geringem Aufwand sicherstellt, daß die Späneableitung auch dann gelingt, wenn nasses Holz bearbeitet wird.

Zur Lösung dieser Aufgabe geht die Erfindung aus von einer Vorrichtung der eingangs angegebenen Gattung und schlägt vor, daß in der Druckluftleitung ein steuerbares Ventil angeordnet ist, und daß ferner eine Schaltung vorgesehen ist, die fortlaufend kurzzeitig das Ventil öffnet.

Es ist gefunden worden, daß durch impulsartige, kurze Druckluftstöße die sich ablagernden Späne weiterbefördert werden können, so daß eine Anhäufung und Ablagerung im Messerbereich ausgeschlossen ist. Durch die impulsartige Zuleitung von Druckluft bleibt der Gesamtverbrauch an Druckluft gering, auch wenn kurzfristig mit dem vollen zur Verfügung stehenden Druck von in der Regel 6 bar gearbeitet wird. Für die Druckluftversorgung reicht im allgemeinen die Drucklufteinrichtung aus, die ohnehin in der Nähe derartiger Maschinen installiert ist.

Bei einer Ausführungsform der Maschine wird vorgeschlagen, daß die Druckluftzuleitung etwa parallel zur Achse des Hobelmessers in den Späneableitungskanal ausmündet. Es wurde gefunden, daß es nicht notwendig ist, den Druckluftstrom in der Ableitungsrichtung einzubringen, um die angestrebte Wirkung zu erreichen. Dadurch können komplizierte Kanäle in der Nähe des Beginns des Ableitungskanals vermieden werden. Es genügt eine einfache, rechtwinklige Einleitung zur Hauptströmungsrichtung. Die Weiterleitung der Späne erfolgt in der gewünschten Richtung.

Gute Ergebnisse wurden erzielt, wenn eine Schaltung vorgesehen ist, die etwa alle 3 Sekunden ein Ventil öffnet. Die Einschaltdauer beträgt dabei vorzugsweise etwa 0,2 Sekunden. Es ist klar, daß hierdurch gegenüber einer Daueröffnung der Zuleitung eine Reduzierung des Druckluftverbrauches auf etwa den fünfzehnten Teil erreicht wird.

Die Schaltung zur Steuerung des Ventils kann beispielsweise vom Antrieb der Hobelmaschine gesteuert sein. In vielen Fällen empfiehlt es sich jedoch, eine programmierbare Steuerung der Schaltung vorzusehen, wobei beispielsweise das Arbeitsprogramm benützt werden kann, nach dem die Hobelmaschine ohnehin ihre Bearbeitungsvorgänge durchführt.

In der Zeichnung ist ein Ausführungsbeispiel der Erfindung schematisch dargestellt. Es zeigen:

Fig. 1 eine Seitenansicht einer Hobemaschine mit einer erfindungsgemäßen Vorrichtung teilweise im Schnitt, und

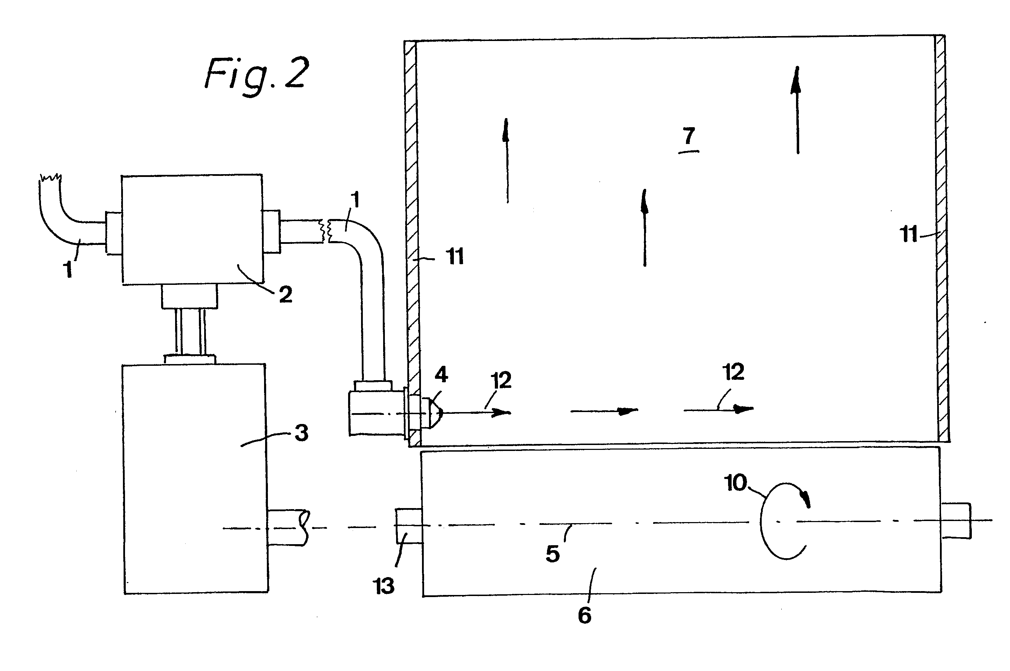

Fig. 2 eine Draufsicht mit Schnitt einer erfindungsgemäßen Vorrichtung.

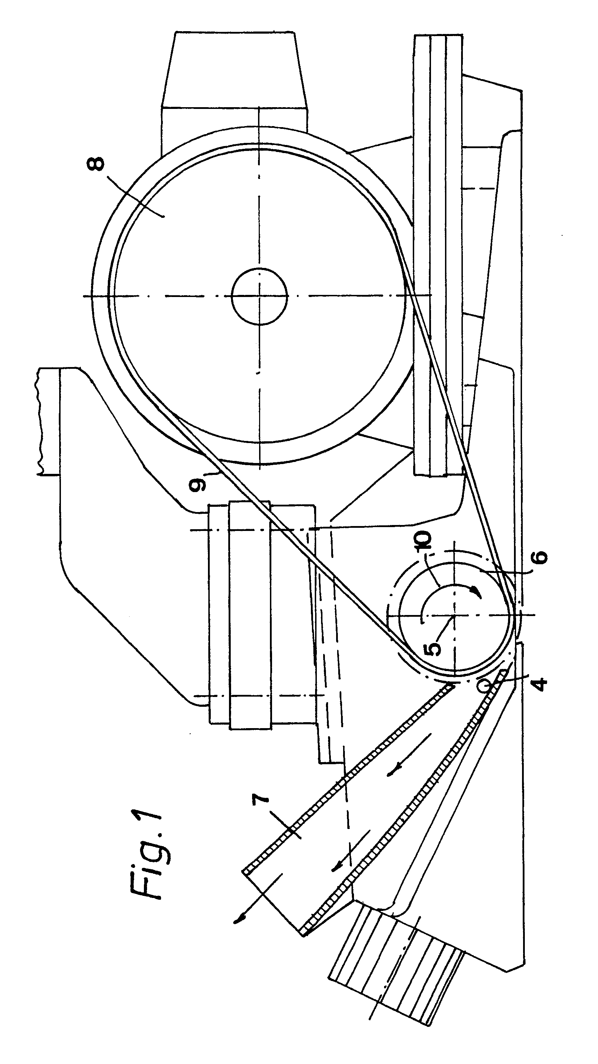

Die Hobelmaschine, die in der Fig. 1 gezeigt ist, besitzt eine an sich bekannte Ausbildung. Der Motor 8 treibt über einen Riemen 9 das Hobelmesser 6 an, das in Richtung des Pfeiles 10 um die Achse 5 umläuft.

Das Gestell, in dem das Hobelmesser gelagert ist, umschließt den Späneableitungskanal 7, der beim Hobelmesser 6 beginnt. Die Wände dieses Kanals sind mit 11 bezeichnet.

In einer Seitenwand des Kanals ist die Druckluftzuleitung 4 angeordnet, die einen impulsartigen Druckluftstrom in Richtung der Pfeile 12 abgibt. Die Druckluftleitung ist mit 1 bezeichnet. In dieser Druckluftleitung ist ein Ventil 1 eingebaut, das in der Zeichnung nur schematisch dargestellt ist und das eine beliebige Ausbildung besitzen kann. Insbesondere kann es ein elektromagnetisch betätigtes Ventil sein. Das Ventil kann aber auch derart ausgestaltet sein, daß es durch seine Bauweise selbständig Öffnungs- und Schließbewegungen ausführt, um die impulsartige Druckluftabgabe an der Druckluftzuleitung 4 sicherzustellen.

In der Zeichnung ist ein Schaltgehäuse vorgesehen, das die Schaltung 3 aufnimmt, die nicht näher dargestellt ist. Die Ausbildung der Schaltung ist einfach. Es geht nur darum, mit zeitlichem Abstand von einigen Sekunden kurze Schaltimpulse abzugeben, die das Ventil 2 kurzfristig öffnen und dann wieder schließen. Die Schaltung 3 kann beispielsweise von der Welle 13 des Hobelmessers 6 angetrieben sein. Die Steuerung der Schaltung kann aber auch durch andere Mittel, beispielsweise durch ein Programm erfolgen.

## Ansprüche

1. Vorrichtung zur Späneableitung an Hobelmaschinen oder ähnlichen spanerzeugenden Holzbearbeitungsmaschinen, mit einem Spanableitungskanal, der in der Nähe des Werkzeuges, insbesondere der Hobelmesser beginnt, mit einer Druckluftzuleitung zum Kanal, dadurch gekennzeichnet, daß in der Druckluftleitung (1) ein steuerbares Ventil (2) angeordnet ist und ferner gekennzeichnet durch eine Schaltung (3), die fortlaufend kurzzeitig das Ventil öffnet.

2. Vorrichtung nach Anspruch 1, dadurch gekennzeichnet, daß die Druckluftzuleitung (4) etwa parallel zur Achse (5) des Hobelmessers in den Späneableitungskanal ausmündet.

3. Vorrichtung nach einem oder beiden der vorhergehenden Ansprüche, gekennzeichnet durch eine Schaltung (3), die etwa alle drei Sekunden das Ventil (2) öffnet.

4. Vorrichtung nach einem oder mehreren der vorhergehenden Ansprüche, gekennzeichnet durch eine Schaltung (3), die etwa 0,2 Sekunden lang das Ventil (2) öffnet.

5. Vorrichtung nach einem oder mehreren der vorhergehenden Ansprüche, dadurch gekennzeichnet, daß die Schaltung (3) vom Antrieb des Hobelmessers (6) gesteuert ist.

6. Vorrichtung nach einem oder mehreren der vorhergehenden Ansprüche, gekennzeichnet durch eine programmierbare Steuerung der Schaltung (3).

Fig.1

EP 0 380 954 A2

Fig. 2